# EUROPÄISCHE PATENTSCHRIFT

(11) **EP 1 513 749 B1**
(45) Veröffentlichungstag und Bekanntmachung des Hinweises auf die Patenterteilung: **07.06.2006**
(21) Anmeldenummer: 03724770.7
(22) Anmeldetag: 03.06.2003
(51) Int. Cl.: B65G 47/14, B65G 27/32, B65G 43/08

(54) **FÖRDERUNG VON SCHÜTTGUTTEILEN**
TRANSPORT OF BULK MATERIAL ITEMS
TRANSPORT DE PIECES EN VRAC

(30) Priorität: 06.06.2002 CH 958022002
(43) Veröffentlichungstag der Anmeldung: 16.03.2005
(73) Patentinhaber: Flexfactory AG, 8953 Dietikon (CH)
(72) Erfinder: BÜCHI, Felix, CH-8114 Dänikon (CH)
(74) Vertreter: Breiter, Heinz
(86) Internationale Anmeldenummer: PCT/CH2003/000345
(87) Internationale Veröffentlichungsnummer: WO 2003/104116

(56) Entgegenhaltungen:
- EP-A- 0 213 417
- AT-B- 341 426
- DE-A- 3 707 971
- US-A- 5 575 378
- US-A- 5 687 831

## Beschreibung

Die Erfindung bezieht sich auf eine Vorrichtung ein Verfahren zum Zuführen von Schüttgutteilen aus einer in einem Speicher mehrfach übereinander angeordneten Masse in eine stochastisch reorientierbare, individuell verteilte und entwirrte Lage in Griffweite eines Roboters, wobei die Vorrichtung eine im Wesentlichen horizontal angeordnete Schwingförderfläche mit Mitteln zum Vorschub oder Rückzug der Schüttgutteile in x- oder in x- und y- Richtung der Raumkoordinaten, Mittel zum Anregen einer wenigstens teilweisen Schwingung der Schwingförderfläche in z- Richtung der Raumkoordinaten, ein Visionssystem mit einer Kamera oder einem Sensor zum individuellen Erfassen der Anzahl, Lage und Ausrichtung der vereinzelten Schüttgutteile, und einen Prozessor zur Verarbeitung der Sensorsignale und zur Generierung von Steuerbefehlen an Aktoren umfasst.

Bei der industriellen Herstellung und Montage von Konsumgütern werden mehr oder weniger komplizierte Massenteile häufig in Schüttgutform zur weiteren Verarbeitung bereitgestellt. Für die folgenden Bearbeitungs- und/oder Montageoperationen werden die Schüttgutteile entwirrt, vereinzelt und in definierter, ausgerichteter Position benötigt. Dafür werden häufig Vibrationswendelförderer eingesetzt, in welchen entlang eines Förderwendels mechanische Schikanen angebracht sind. Diese orientieren die Schüttgutteile entlang ihrer Förderrichtung oder eliminieren sie, so dass am Austrittsort nur richtig orientierte Schüttgutteile ankommen. Eine zusätzliche mechanische Einrichtung kann dort für die Vereinzelung und Feinpositionierung der Schüttgutteile sorgen, welche dank diesen vorbereitenden Arbeitsschritten von einem Handlingsystem oder einem Roboter angesteuert und entnommen werden können.

Die Anordnung und Ausbildung von Schikanen muss für jede Art von Schüttgutteilen spezifisch optimiert werden. Die Flexibilität der Wendelförderer ist in den letzten 10 bis 15 Jahren durch die Verwendung aktiver Schikanen (Sensor/Aktor) und auswechselbarer Schikanen/Positionierstationen weiter verbessert worden, können jedoch den heutigen Forderungen der Industrie nach flexiblen, selbstentstörenden Zuführungen, welche für unterschiedliche Schüttgutteile programmiert werden können, noch nicht entsprechen.

Mehrere bekannte flexible Zufuhrsysteme bestehen aus einer Einheit, welche die Schüttgutteile mechanisch so aufbereitet, dass sie durch ein Visionssystem genanntes Bildverarbeitungssystem (machine vision) erkannt und durch einen Roboter entnommen werden können. Schüttgutteile die nicht erkannt werden, wandern zurück in das bereitgestellte Schüttgut und kommen zu einem späteren Zeitpunkt wieder an die Reihe.

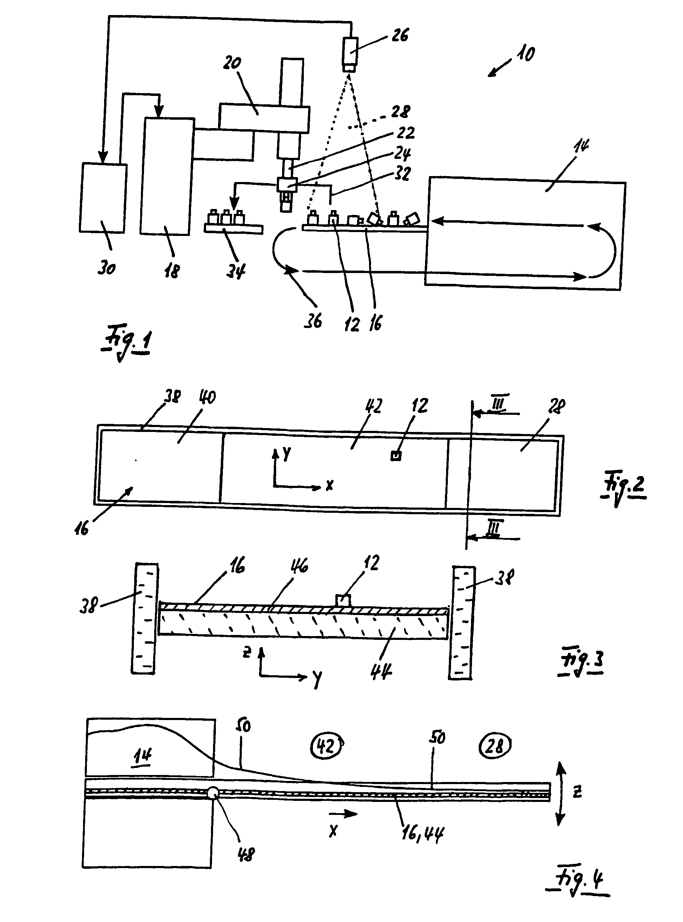

In einer bekannten Vorrichtung 10 zum flexiblen Zuführen von Schüttgutteilen 12 gemäss Fig. 1 werden diese in einem Speicher 14 teilweise aufbereitet. Die Schüttgutteile 12 verlassen den Speicher 14 auf einer Förderfläche 16 und wandern in Richtung eines Roboters 18 mit einem Schwenkarm 20, welcher ein stimseitig auf einer höhenverstellbaren Welle 22 befestigtes, um diese Welle 22 drehbares Greifwerkzeug 24 für Schüttgutteile 12 trägt.

Eine Kamera 26 ermittelt in einer durch punktierte Linien dargestellten Selektionszone 28 die exakte Position der Schüttgutteile 12 in der gewünschten Vorzugslage. Eine Robotersteuerung 30 berechnet anhand von übermittelten Daten die Koordinaten und steuert die Aktoren des Roboters 18 entsprechend an, dieser ergreift die Schüttgutteile 12, welche in der erwähnten gewünschten Vorzugslage angeordnet sind, in Sekundenschnelle. Die entfernten Schüttgutteile 12 werden auf ein Förderband 34 gelegt und der Weiterverarbeitung zugeführt, was mit einem Pfeil 32 angedeutet ist.

Die vom Roboter 18 nicht ergriffenen Schüttgutteile 12 dagegen werden im Speicher 14 recycliert und mit weiteren, im Speicher gelagerten Schüttgutteilen 12 erneut in stochastischer Anordnung über die Förderfläche 16 in die Selektionszone 28 geführt.

In periodischen Zeitabständen müssen alle im Speicher 14 enthaltenen Schüttgutteile 12 ausgewechselt werden, damit defekte Schüttgutteile 12 nicht ständig in Rotation bleiben.

In der US,A 5687831 wird eine Vorrichtung zur Zuführung von Schüttgutteilen beschrieben, welche eine im Wesentlichen horizontale Förderfläche umfasst. Die Schüttgutteile werden zu einer Selektionszone transportiert, dort werden die günstig angeordneten und ausgerichteten Schüttgutteile mittels einer Videokamera geortet, durch einen Roboter ergriffen und an ein Montagesystem übergeben. Die nicht entfernten Schüttgutteile werden mittels eines Rezirkulationssystem für einen erneuten Durchgang an den Anfang der Förderfläche zurückgeführt. Während der Rückführung wird die Lage und die Ausrichtung der Schüttgutteile so verändert, dass diese beim nächsten Durchgang möglichst günstig ausgerichtet sind und möglicherweise in der Selektionszone ausgewählt und entfernt werden können. Die Vorrichtung nach der US,A 5687831 kann wohl eine breite Varianz von Schüttgutteilformen bearbeiten, sie ist jedoch konstruktiv verhältnismässig aufwendig und erfordert ein erhebliches Bauvolumen für die Anordnung der Förderfläche, der Selektionszone und des Rezirkulationssystems.

In einer Vorrichtung zum flexiblen Zuführen von Schüttgutteilen gemäss der US,A 6056108 ist eine flexible Membrane zum Transport von flexiblen Schüttgutteilen angeordnet, auf welcher eine Selektionszone definiert ist. In diesem Bereich wird die Lage der Schüttgutteile durch ein maschinelles Visionssystem analysiert. Die Sensorsignale werden in einem Prozessor zu Steuerbefehlen umgewandelt, welche selektiv die Übertragung eines Impulses auf bestimmte Stellen der flexiblen Membrane auslösen, wodurch die Lage von wenigstens einigen Schüttgutteilen in der Selektionszone geändert und in eine gewünschte positive Ausrichtung gebracht wird. Diese Schüttgutteile mit der gewünschten Ausrichtung werden ausgewählt und durch einen Roboter von der Membrane entfernt.

Eine Zuführungsvorrichtung für Schüttgutteile zu einem Roboter gemäss der WO,A1 00/69240 umfasst eine für den Roboter zugängliche Selektionszone einer Einrichtung zum stochastischen Verändern der Lage und/oder der Ausrichtung und eine Einrichtung mit einem Teilerezirkulationselement zum Rezirkulieren der nicht ergriffenen Schüttgutteile. Die Einrichtung zum stochastischen Verändern der Lage und/oder der Ausrichtung der Schüttgutteile ist eine gleichzeitig als Selektionszone ausgebildete Rüttelplattform. In einer ersten relativen Position von Rezirkulationselement und Rüttelplattform kann diese mit Schüttgutteilen des Rezirkulationselementes beschickt werden. In einer zweiten relativen Position können die Schüttgutteile, die von der Rüttelplattform herunterfallen, vom Rezirkulationselement aufgefangen werden. Im Betrieb der Vorrichtung zum Zuführen von Schüttgutteilen für einen Roboter werden in einem kontinuierlichen Endlosvorgang wenigstens sechs Schritte hintereinander durchgeführt. In einem ersten Schritt wird die Rüttelplattform mit Schüttgutteilen vom Teilerezirkulationselement beschickt. In einem zweiten Schritt werden von der Rüttelplattform herabfallende Schüttgutteile vom Rezirkulationselement aufgefangen. In einem dritten Schritt wird die Lage und/oder die Ausrichtung der Schüttgutteile auf der Rüttelplattform stochastisch verändert. In einem vierten Schritt wird die Lage und die Ausrichtung der Schüttgutteile detektiert und die Daten an den Roboter übermittelt, welcher in einem fünften Schritt Schüttgutteile in günstiger Lage und Ausrichtung ergreift und wegbefördert. In einem sechsten Schritt wird die Anzahl der auf der Rüttelplattform verbliebenen Schüttgutteile bestimmt und je nach Ergebnis zum ersten oder dritten Schritt zurückgekehrt.

Der Erfinder hat sich die Aufgabe gestellt, eine Vorrichtung und ein Verfahren der eingangs genannten Art zu schaffen, welche das Zuführen von Schüttgutteilen aus einem Speicher zu einem Roboter weiter verbessern und vereinfachen.

Bezüglich der Vorrichtung wird die Aufgabe erfindungsgemäss dadurch gelöst, dass eine einteilig ausgebildete Schwingförderfläche von einem Schwingförderarm abgestützt ist, welche Schwingförderfläche mit ersten oder mit ersten und zweiten Mitteln in x- oder in x- und y- Richtung horizontal verschiebbar ist und sich von einer Speicherzone über eine Distributionszone bis zum stirnseitigen Ende einer Selektionszone für die Schüttgutteile erstreckt und zusammen mit dem Schwingförderarm frei auskragt, die Speicher-, Distributions- und Selektionszone eine Umrandung mit Spiel zu Schwingförder arm Forderfläche aufweisen, und dritte Mittel zur Erzeugung der Schwingbewegung in z- Richtung mit dem Schwingförderarm verbunden sind. Spezielle und weiterbildende Ausführungsformen der erfindungsgemässen Vorrichtung sind Gegenstand von abhängigen Patentansprüchen.

Der Schwingförderarm ist im wesentlichen brettförmig und in der Regel länglich ausgebildet, besteht aus einem hinreichend mechanisch festen, elastischen Material, kann im Bereich der Distributions- und Selektionszone innerhalb der Umrandung einends frei schwingen und so die Schüttgutteile für eine Reorientierung aufwerfen. Der Vorschub und ein allfälliger Rückzug der Schüttgutteile erfolgt dadurch, dass die vom Schwingförderarm abgestützte einteilige Schwingförderfläche mit ersten Mitteln linear in x-Richtung des freien Endes der Selektionszone oder mit ersten und zweiten Mitteln flächig in x-Richtung des stirnseitigen Endes der Selektionszone und in y-Richtung senkrecht dazu bewegbar ist. In beiden Fällen ist durch entsprechende Mittel der ersten oder ersten und zweiten Mittel eine gezielte Förderrichtung möglich. Der Schwingförderarm ist in der Regel im Bereich der Speicherzone fest montiert, kann aber bei kleineren Anlagen dank der kleineren Masse des Schwingförderarms auch in x- oder x- und y-Richtung verschiebbar montiert und fest mit der Schwingförderfläche verbunden sein. Bei grösseren Anlagen könnte ein in x- oder x- und y-Richtung bewegbarer Schwingförderarm wegen der grösseren Masse zu unzulässigen Schwingungen des Maschinentischs führen.

Zwischen der Speicher- und der Distributionszone wird im Schwingförderarm vorzugsweise ein Sollbiegebereich ausgebildet, was beispielsweise durch wenigstens eine querlaufende Schwächungsnut und/oder Bohrung erfolgt. Eine Schwächungsnut ist zweckmässig unten angeordnet, zwei Schwächungsnuten können unten nebeneinander oder übereinander liegend angeordnet sein, letzteres nur falls die auf dem Schwingförderarm aufliegende Schwingförderfläche im Bereich der Nut hinreichend tragfähig ist. Mehr als zwei Nuten werden sinngemäss angeordnet. Ebenso können zwei oder mehr Bohrungen neben/oder übereinander angeordnet sein, auch in Kombination mit Nuten. Die geometrische Querschnittsform von Nuten und Bohrungen ist nicht von wesentlicher Bedeutung. Anstelle der Ausbildung von wenigstens einer Nut und/oder einer Bohrung kann der Schwingförderarm zur Bildung einer Schwächungslinie zweiteilig ausgebildet sein, wobei die beiden Teile mit wenigstens einer Feder verbunden sind, vorzugsweise über eine oder mehrere Blattfedern, z.B. aus Federstahl. Die Ausbildung einer Schwächungslinie bewirkt, dass der Schwingförderarm praktisch scharnierartig wirkt und eine weit geringere Federwirkung hat. Die Federkonstante des Schwingförderarms bezüglich dieser "Drehachse" wird praktisch durch die Feder eines Hubzylinders für die Schwingungsanregung in z-Richtung bestimmt.

Die in x- und ggf. auch in y- Richtung des Koordinatensystems auf die Schwingfördertläche oder auf den Schwingförderarm einwirkenden ersten und zweiten Mittel, sowie die vorzugsweise abgefedert auf die in z- Richtung auf den Schwingförderarm einwirkenden dritten Mittel sind in der Praxis beispielsweise an sich bekannte pneumatische oder hydraulische Hubzylinder mit Kolben und Kolbenstange, es können jedoch auch elektrische Linear- oder Schrittmotoren eingesetzt werden. Wegen dem schnellen Arbeitstakt in Sekundenbruchteilen wären beispielsweise Spindeln mit einem Läufer problematischer.

In der Zeitspanne zwischen dem Erfassen von Lage und Ausrichtung der Schüttgutteile in günstiger Lage und dem Ergreifen durch den Roboter darf sich die Schwingförderfläche weder in x- noch y- Richtung bewegen, weil sonst die aufgrund der Sensorsignale vom Prozessor errechneten Koordinaten zur Ergreifung von günstig angeordneten Schüttgutteilen nicht mehr stimmen würde. Ebenso muss während dieser Zeitperiode die Schwingbewegung in z- Richtung gestoppt werden. Dies erfolgt in der Regel mit einem am Schwingförderarm die Schwingbewegung in z- Richtung dämpfenden Mittel, zweckmässig mit einem an sich bekannten Dämpfungszylinder, einer Gummikugel oder einem Gummibalg.

Auch ist unter dem Schwingförderarm zweckdienlich ein Sensor zur Messung von dessen Auslenkung und Frequenz angeordnet. Aus den übermittelten Messwerten kann der Prozessor die Eigenfrequenz des Schwingförderarms mit den daran befestigten Komponenten und für jeden Ort auf der Schwingförderfläche die Amplitude berechnen und für industrielle Prozesse auswerten. Die Eigenfrequenz der Schwingung in z-Richtung wird auch durch die Ausbildung von Schwächungsnuten und/oder -bohrungen im Sollbiegebereich beeinflusst. Derart kann die für die Erzeugung einer Schwingbewegung notwendige Energie reduziert und der Vorgang effizienter gestaltet werden, als bei einer grundsätzlich auch möglichen anderen Frequenz als der Eigenfrequenz.

Die stirnseitige Umrandung der Selektionszone, welche die Vorschubbewegung der Schüttgutteile beendet, ist vorzugsweise auch automatisch entfernbar ausgebildet, insbesondere als Schieber, Türe oder Klappe.

Analog kann zweckmässig die stirnseitige Umrandung der Speicherzone entfernt werden, wenn eine neue Charge von andersartigen Schüttgutteilen zugeführt werden soll. Die Schwingförderfläche kann so in allen Zonen, der Speicher eingeschlossen, schnell und einfach entleert werden, auch automatisch. Auch hier ist der entfembare Teil der Umrandung zweckmässig als Schieber, Türe oder Klappe ausgebildet.

Zur Individualisierung des Gleit- und/oder Rollwiderstandes der Schüttgutteile kann die Schwingförderfläche ausgewechselt werden, sie besteht z.B. aus einem Polyamid. Weiter kann die Schwingförderfläche zur Veränderung der Haftreibung aufgerauht oder strukturiert ausgebildet sein oder eine Beschichtung aufweisen, insbesondere aus einem Gewebe oder Vlies. Andererseits muss die Schwingförderfläche neben einer optimalen Haftreibung auch einen geringen Abrieb haben, also mechanisch möglichst verschleissfest sein.

Nach einer speziellen Ausführungsform ist der Schwingförderarm mit der Schwingförderfläche wenigstens im Bereich der Selektionszone transparent ausgebildet und unterhalb dieser Zone ein Gegenlicht (backlight) angeordnet.

Bezüglich des Verfahrens zum Betrieb einer Vorrichtung nach dem Oberbegriff von Patentanspruch 1 wird die Aufgabe erfindungsgemäss dadurch gelöst, dass eine Schwingbewegung in z- Richtung mit in x-Richtung kontinuierlich zunehmender, programmierbarer Amplitude, dadurch entsprechend erhöhter Geschwindigkeit und Beschleunigung der Schüttgutteile, erzeugt wird, welche alternierend oder wenigstens teilweise gleichzeitig und koordiniert mit einer Vorschub- oder Rückzugsförderung der Schüttgutteile in x- oder in x- und y- Richtung erfolgt, wobei während der Zeitperiode einer Momentaufnahme durch das Visionssystem bis zur Entnahme von Schüttgutteilen durch den Roboter alle Bewegungen der Schwingförderfläche in x- oder in x- und y- Richtung gestoppt und die Schwingbewegungen in z- Richtung gedämpft oder gestoppt werden. Spezielle und weiterführende Verfahrensvarianten sind Gegenstand von abhängigen Patentansprüchen.

Dank der in z- Richtung zunehmenden Schwingungsamplitude des Schwingförderarms und der mitschwingenden Schwingförderfläche mit entsprechend erhöhter Geschwindigkeit und Beschleunigung der Schüttgutteile wird der Reorganisationsgrad und die Individualisierung in Richtung des stirnseitigen Endes der Selektionszone ebenfalls kontinuierlich zunehmend, was sich für den praktischen Verlauf des Verfahrens positiv auswirkt.

Vorzugsweise wird die in x- Richtung zunehmende Schwingungsamplitude durch Übertragung einer programmierbaren Schwingbewegung, insbesondere einer Frequenz von 5 bis 30 Hz, auf einen die Schwingförderfläche vollflächig abstützenden, aussefialb einer Speicherzone frei auskragenden Schwingförderarm erzeugt. Die erfindungsgemäss einteilig ausgebildete Schwingförderfläche erlaubt auch das Zuführen von kleinen und flachen Schüttgutteilen, welche beim Übergang von der einen Schwingförderfläche zur andern teilweise verklemmen oder gar verschwinden würden.

Bevorzugt erfolgt die Vorschubbewegung der vom Schwingförderarm vollflächig abgestützten oder mit diesem verbundenen Schwingförderfläche in x- oder in x- und y- Richtung und die entsprechende Rückzugsbewegung mit unterschiedlicher Beschleunigung. Bei der Förderung in Richtung der Stirnseite der Selektionszone erfolgt die Beschleunigung zur Vorwärtsbewegung so langsam, dass die Schüttgutteile nicht oder nur wenig rutschen. Die Beschleunigung zur Rückzugsbewegung dagegen erfolgt bei dieser Förderrichtung so schnell, dass die Schüttgutteile wegen ihrer Trägheit an Ort bleiben oder sich nur geringfügig verschieben. Beide Bewegungen erfolgen innerhalb von Sekundenbruchteilen. Durch dieses rasche Hin- und Herfahren der Schwingförderfläche wird neben der resultierenden Vorschubrichtung das Schüttgut auf der Schwingförderfläche vereinzelt und stochastisch in zufälliger Lage verteilt. Auf diese Weise kann ein Vorschub von mehreren Zentimetern pro Sekunde erreicht werden, im Bereich der Selektionszone sind die Schüttgutteile in hinreichender Anzahl vorhanden und für den Greifer des Roboters genügend verteilt.

Sollten zuviele Schüttgutteile in der Selektionszone sein, kann anstelle einer Vorschub- eine Rückwärtsbewegung erreicht werden, indem die langsamere Bewegung in x- oder x- und y- Richtung gegen die Speicherzone, die schnellere gegen die Selektionszone erfolgt.

Eine Vorschubbewegung der Schüttgutteile kann auch erreicht werden, indem eine Vorwärtsbewegung ruckartig abgebrochen und wegen der kinetischen Energie der Schüttgutteile deren Rutschen bewirkt wird, beispielsweise durch einen harten Anschlag, die Rückwärtsbewegung dagegen langsamer abgebrochen wird. Selbstverständlich sind auch Kombinationen der beiden Vorschub- bzw. Rückzugsvarianten möglich.

Alle Bewegungen der Schwingförderfläche in x-, y- und/oder z-Richtung werden vorzugsweise nach Signalen der Kamera oder eines anderen Sensors über die Anzahl, Lage und/oder Ausrichtung von Schüttgutteilen in der Selektionszone durch den Prozessor gesteuert und koordiniert. Durch Bewegungen der Schwingförderfläche in x- oder x- und y- Richtung kann der Vorschub oder Rückzug der Schüttgutteile bestimmt werden, durch Amplitude und Frequenz der Schwingbewegung in z- Richtung die stochastische Änderung der Ausrichtung dieser Schüttgutteile.

Fehlerhafte Schüttgutteile werden in der Regel auch nach zahlreichen Arbeitszyklen nicht so ausgerichtet, dass sie vom Visionssystem erkannt und vom Roboter mit gleicher Wahrscheinlichkeit wie die andern ergriffen werden, was im Bereich der Selektionszone zu einer Anreicherung der "schlechten" Schüttgutteile führt. Bei Überschreitung eines anhand von Signalen der Kamera oder eines anderen Sensors festgestellten Anteils von "schlechten" Schüttgutteilen in der Selektionszone steuert der Prozessor vorzugsweise einen Aktor für die automatische Öffnung der stirnseitigen Umrandung an, wodurch alle in der Selektionszone befindlichen Schüttgutteile entfernt werden, "gute" und "schlechte". Zweckmässig erfolgt die Öffnung der stirnseitigen Umrandung erst nach einer Reduktion oder Unterbindung der Zufuhr von Schüttgutteilen aus der Speicherzone, damit der Anteil von ausgeschiedenen "guten" Schüttgutteilen vermindert werden kann.

Die Vorteile der vorliegenden Erfindung können wie folgt zusammengefasst werden:
- Durch die Ausbildung eines frei aus der Speicherzone in die Distributions- und Selektionszone auskragenden Schwingförderarms mit einer weitgehend horizontalen Schwingförderfläche können Schwingungen in z- Richtung mit in Förderrichtung zunehmender Amplitude und Geschwindigkeit erzeugt werden. Dies vereinfacht und verbessert die kontinuierliche Vereinzelung und wo notwendig Entwirrung der Schüttgutteile in Förderrichtung und steigert die Effizienz der Rekombination zur neuen stochastischen Ausrichtung der Schüttgutteile.
- Für die Schwingbewegung in z- Richtung kann die energetisch günstige Eigenfrequenz der Maschinenkonfiguration mit dem Schwingförderarm genutzt werden.
- Die einteilige Ausbildung einer auch wechselbar auf einem Schwingförderarm aufliegenden Schwingförderfläche erlaubt eine effiziente Förderung der Schüttgutteile in Vorschub- und Rückzugsrichtung, die Selektionszone kann rasch mit neuen Schüttgutteilen versorgt oder von überzähligen Schüttgutteilen befreit werden.
- Die Elimination von "schlechten" Schüttgutteilen aus der Selektionszone kann effizient und mit geringen Verlusten von guten Schüttgutteilen erfolgen.
- Das Entleeren der Vorrichtung von allen Schüttgutteilen zwecks Umstellung auf ein anderes Produkt oder der Reinigung der Vorrichtung kann einfach und automatisch erfolgen.

Die Erfindung wird anhand von in der Zeichnung dargestellten Ausführungsbeispielen, welche auch Gegenstand von abhängigen Patentansprüchen sind, näher erläutert. Es zeigen:
- - Fig. 2: eine Draufsicht auf den Schwingförderbereich einer Vorrichtung zum Zuführen von Schüttgutteilen,
- - Fig. 3: ein Querschnitt entlang der Linie III-III von Fig. 2,
- - Fig. 4: ein Schema des Bereichs gemäss Fig. 2 in Ansicht,
- - Fig. 5: ein teilweiser Längsschnitt durch einen Schwingförderarm mit einer Schwingförderfläche im Sollbiegebereich,
- - Fig. 6: eine Variante von Fig. 5,
- - Fig. 7: eine weitere Variante von Fig. 5,
- - Fig. 8: eine aufgeschnittene Ansicht einer grossen Vorrichtung zum Zuführen von Schüttgutteilen
- - Fig. 8a: einen Querschnitt im Bereich des Schwingförderarms
- - Fig. 9: eine Draufsicht auf den Bereich gemäss Fig. 2,
- - Fig. 10: eine detailliertere Ausführungsform von Fig. 4,
- - Fig. 11: eine Charakterisierung eines Förderprinzips in Ausgangsstellung,
- - Fig. 12: die Anordnung gemäss Fig. 11 nach dem Erreichen eines Anschlags,
- - Fig. 13: eine Anordnung gemäss Fig. 11 nach Beendigung der Rückwärtsbewegung,
- - Fig. 14: eine Anregung des Schwingarms durch kontinuierliche Rechtecksignale, und
- - Fig. 15: eine aufgeschnittene Ansicht einer kleinen Vorrichtung zum Zuführen von Schüttgutteilen.

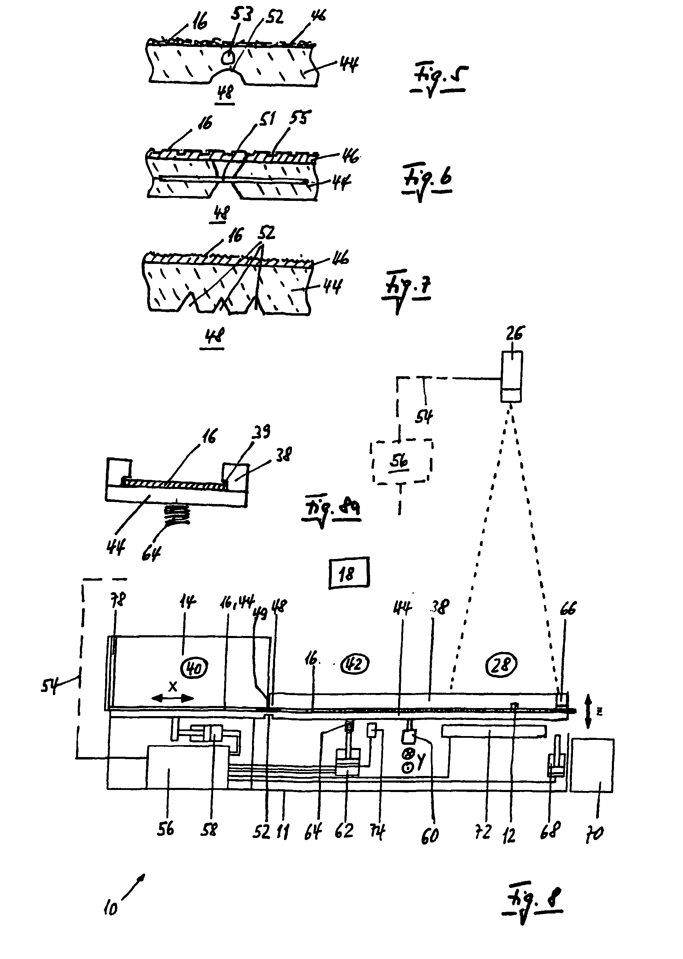

Fig. 2 zeigt in Draufsicht eine Förderfläche 16 mit einer Umrandung 38. Die einteilige Förderfläche 16 ist funktionell in eine Speicherzone 40, eine Distributionszone 42 und eine Selektionszone 28 aufgeteilt, wobei der Übergang von Zone zu Zone nicht wie mit Linien dargestellt scharf, sondern innerhalb eines Bereichs fliessend und ohne Unterbruch auf der Oberfläche ist, insbesondere zwischen der Distributions- 42 und Selektionszone 28. Die Förderrichtung der Schüttgutteile 12 ist mit der Raumkoordinate x bezeichnet. Insbesondere bei einer breit ausgebildeten Schwingförderfläche 16, kann der Vorschub der Schüttgutteile 12 nicht nur in x-, sondern auch in x- und y- Richtung erfolgen.

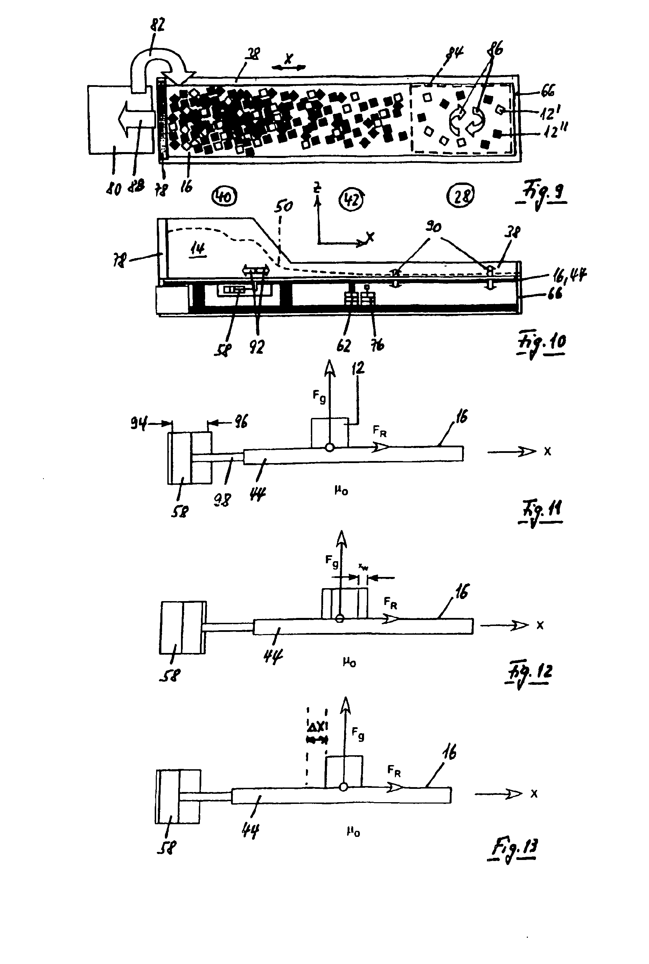

Fig. 3 zeigt die Anordnung eines frei auskragenden Schwingförderarms 44 in Ruhelage, welcher eine die Schwingförderfläche 16 bildende, gegenüber dem Schwingarm 44 wenigstens in x-Richtung verschiebbare und leicht auswechselbare Schicht 46 trägt, im vorliegenden Fall aus einer Polyamidplatte. Der Schwingförderarm 44 ist brettförmig ausgebildet und besteht aus elastisch federndem Material von hoher mechanischer Festigkeit, beispielsweise aus einer Aluminiumplatte von 100 x 30 x 1 cm. Im Übergangsbereich von der Speicherzur Distributionszone ist auf der Unterseite eine halbzylinderförmige Quemut ausgespart, welche an der schwächsten Stelle eine Materialdicke von 0,3 cm übrig lässt. Der einends fest montierte Schwingförderarm 44 ist mit Spiel zwischen einer ortsfesten Umrandung 38 angeordnet, welche unten und oben übersteht und so die auf der Schwingförderfläche 16 angeordneten Schüttgutteile 12 gegen Abwurf schützt, wenn der brettförmig ausgebildete Schwingförderarm 44 in der Art eines Sprungbrettes in z- Richtung schwingt.

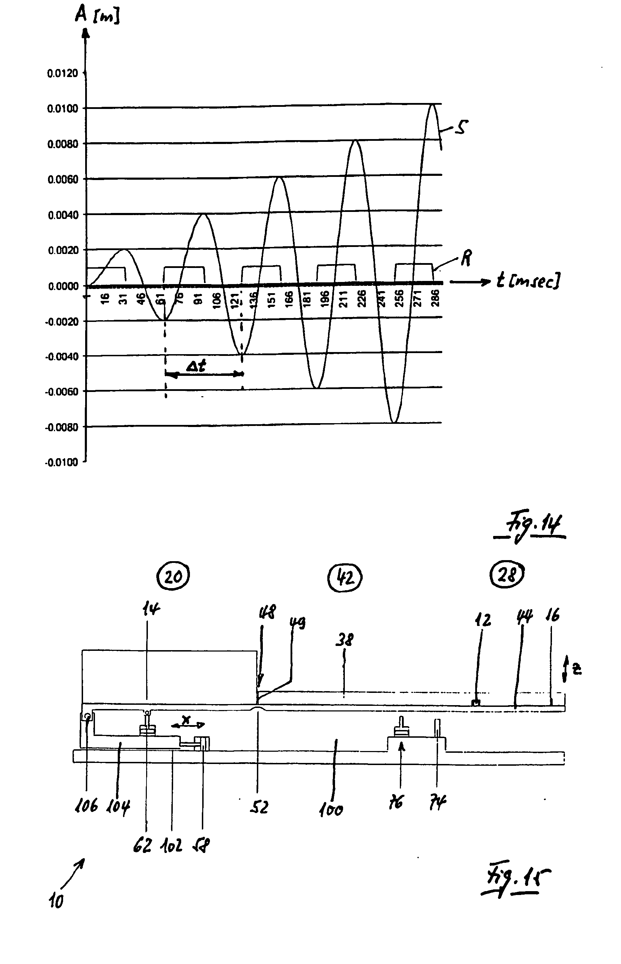

Der gemäss Fig. 4 weit auskragende Schwingförderarm 44 mit der verschiebbar aufliegenden Schwingförderfläche 16 kann an einem Ende, wie durch den Doppelpfeil z dargestellt, frei schwingen, wobei die Schwingförderfläche mitschwingt. Im Bereich des Speichers 14 bzw. der Speicherzone 40 (Fig. 2) ist der Schwingförderarm fest verankert, kann jedoch nach einer Variante auch in x- oder x- und z- Richtung verschiebbar sein. Im Übergang von der Speicherzone 40 zur Distributionszone 42 (Fig. 2) ist - wie bereits erwähnt - eine Biegezone 48 ausgebildet, welche durch geeignete Schwächungsmassnahmen in Form von Nuten und/oder Bohrungen sowie zwei Teile verbindende Blattfedern (Fig. 5 bis 7) enger lokalisiert werden kann.

In Fig. 4 ist eine Niveaulinie 50 der Schüttgutteile 12 (Fig. 2, 3) eingezeichnet. Diese Linie zeigt die Begrenzung der übereinander liegenden Schüttgutteile 12 im Speicher 14, sie wird gegen den Speicherausgang niedriger, in der Distributionszone 42 werden die Schüttgutteile 12 durch die in x- Richtung zunehmende Schwingungsamplitude und Geschwindigkeit mehr und mehr vereinzelt und liegen schliesslich in der Selektionszone 28 individuell vor.

In den Fig. 5 bis 7 wird der Schwingförderarm 44 mit der darauf verschiebbaren Schwingförderfläche 16 im Bereich einer Biegezone 48 gezeigt. Diese Biegezone 48 wird gemäss Fig. 5 durch eine im Querschnitt kreissegmentförmige Quemut 52 auf der Unterseite des Schwingförderarms 44 und eine Bohrung 53 besser lokalisiert. Gemäss Fig. 6 ist der Schwingförderarm 44 zweistückig ausgebildet und in der Biegezone 48 mit einer Blattfeder 51 aus Federstahl verbunden, was zu einer Schwächung mit Schamierwirkung führt. In Fig. 7 erfolgt die Lokalisierung der Biegezone 48 durch drei unten liegende, dreieckförmige Quernuten 52, welche bezüglich der Querschnittfläche gleich oder unterschiedlich sein können.

Die Schwingförderfläche 16 gemäss Fig. 5 wird durch ein auf einer in x-Richtung verschiebbaren Platte 46 angeordnetes Vlies gebildet, gemäss Fig. 6 durch eine verschiebbare Platte 46 mit Quer- und/oder diagonal verlaufenden Ausfräsungen 55, welche auch riffelförmig verlaufen können. In Fig. 7 ist die Schwingförderfläche 16 aufgerauht ausgebildet. Die plattenförmig ausgebildeten Schichten 46 können nach Bedarf vom Schwingförderarm 44 abgehoben und ausgewechselt werden.

Nach einer nicht dargestellte und nicht beamspruchten Variante für kleine Anlagen können der Schwingförderarm 44 und die Schicht 46 für die Schwingförderfläche 16 einstückig ausgebildet sein und aus demselben Material bestehen, beispielsweise aus einem Polyamid.

Eine in Fig. 8 gezeigte Vorrichtung zum Zuführen von Schüttgutteilen 12 hat in einem Gehäuse 11 eine von einem Schwingförderarm 44 vollflächig abgestützte Schwingförderfläche 16, welche wiederum eine Speicher- 40, Distributions- 42 und Selektionszone 28 umfasst. Eine CCD Kamera 26 oder ein anderer Sensor, z. B. Radar oder Ultraschall überwacht die Selektionszone 28 und ist über einen nur teilweise angedeuteten elektrischen Leiter 54 mit einem Prozessor 56 verbunden, welcher die empfangenen Signale verarbeitet und die verschiedenen Aktoren gezielt ansteuert. Es werden auch Kollisionen des Robotergreifers mit Schüttgutteilen 12 erfasst und gemeldet, der Prozessor 56 leitet geeignete Massnahmen ein.

Der Schwingförderarm 44 mit der Schwingförderfläche 16 ist in an sich bekannter Weise in der Speicherzone 40 fest montiert und kragt frei über die Distributions- 42 und Selektionszone 28 aus. In der Biegezone 48 ist im Schwingförderarm 44 eine im Querschnitt rechteckförmige Quemut 52 ausgespart.

Die ersten Mittel 58 zur Verschiebung des Schwingförderarms 44 in x-Richtung sind als pneumatisch oder hydraulisch betätigter Hubzylinder 58 ausgestaltet, wobei die Kolbenstange eine Stoss- oder Zugkraft ausübt.

Fakultative zweite Mittel 60 sind analog ausgebildet, sie stossen oder ziehen die Schwingförderfläche 16 in y- Richtung. Die beiden Bewegungen erfolgen koordiniert gleichzeitig oder nacheinander.

Dritte Mittel 62, ebenfalls als pneumatischer oder hydraulischer Zylinder ausgebildet, versetzen den freien Teil des Schwingförderarms 44 in eine Schwingbewegung, vorzugsweise mit der Eigenfrequenz der betreffenden Maschinenkonfiguration. Die Übertragung des Stossimpulses der Kolbenstange erfolgt elastisch über eine Feder 64, die Hubbewegung wird dadurch weniger hart eingekoppelt. Diese Feder 64 bestimmt, bei einer Schwächung der Biegezone 48 weitgehend die Federkonstante des Schwingförderarms 44 mit der Schwingförderfläche 16, insbesondere bei starker Schwächung.

Ein der Selektionszone 28 anliegender stimseitiger Teil 66 (reject gate) der Umrandung 38 kann mit einem vertikal einwirkenden pneumatischen oder hydraulischen Zylinder 68 betätigt werden, im vorliegenden Fall durch Heben. Dadurch kann die Selektionszone auf einfache Weise gereinigt werden, die entfernten Schüttgutteile 12 fallen in einen Reinigungsbehälter 70.

Die Umrandung 38 ist im Bereich der Biegezone 48 durch einen Schnitt 49 vollständig oder praktisch vollständig durchtrennt. Dadurch kann die Umrandung 38 mit dem Schwingförderarm 44 und der Schwingförderfläche 16 abgebogen oder abgewinkelt werden. Nach einer Variante besteht die Umrandung 38 aus flexiblem Material.

Im Fall von Fig. 8 ist die Selektionszone 28 von Schwingförderfläche 16 und Schwingförderarm 44 transparent ausgebildet. Unterhalb des Schwingförderarms 44 ist ein Gegenlicht 72 (backlight) angeordnet, was insbesondere das Erkennen der Ausrichtung der Schüttgutteile 12 erleichtert.

Schliesslich ist unterhalb des Schwingförderarms 44 ein Sensor 74 angeordnet, welcher die effektive Auslenkung des Schwingförderarms 44 und damit der Schwingförderfläche 16 überwacht. Wird der Sollwert für die Amplitude der Schwingbewegung in z- Richtung überschritten, fährt der dritte Zylinder 62 in die Grundstellung zurück und ein Dämpfungsmittel 76 (Fig. 10) in Form eines Dämpfungszylinders, fährt nach oben und stoppt den Schwingförderarm 44 sehr rasch oder bringt diesen in eine definierte horizontale Position. Dieser Sensor 74 wird ebenfalls dazu verwendet, die Eigenfrequenz für eine vorliegende Maschinenkonfiguration automatisch zu ermitteln. Beim Einschalten wird der Schwingförderarm 44 kurz angeregt, der Prozessor 56 analysiert das Sensorsignal und bestimmt die spezifische Eigenfrequenz.

Die erhöhte Umrandung 38 im stirnseitigen Bereich der Speicherzone 40 ist ebenfalls als hebbarer Teil 78 (purge gate) ausgebildet, welcher mit nicht dargestellten Mitteln betätigt wird. Nach dem Heben dieses Teils 78 des Speichers 14 kann ein Produktewechsel mit anderen Schüttgutteilen 12 auch automatisch vorgenommen werden.

Der Roboter 18 mit Schwenkarm und Greifwerkzeug ist lediglich angedeutet, er ist entsprechend Fig. 1 ausgebildet.

In Fig. 8a ist eine Variante eines Schwingförderarms 44 mit Seitenführungen 38 gezeigt, im Schnitt auf der Höhe der Feder 64. Die Schwingförderfläche 16 ist seitlich mit Spiel in entsprechenden Aussparungen 39 geführt.

In Fig. 9 und 10 sind Fig. 2 und 4 detaillierter und in Fig. 9 mit Schüttgutteilen 12 chargiert dargestellt. In der Speicherzone 40, im Speicher 14 am Anfang der Schwingförderfläche16, liegen die Schüttgutteile 12 mehrschichtig übereinander, damit möglichst viele Schüttgutteile 12 gespeichert werden können. Je nach ihrer Gestalt sind die Schüttgutteile 12 nicht, aber auch mehr oder weniger ineinander verhakt. Die bisherigen oder neuen Schüttgutteile 12 werden aus einem externen Behälter 80 eingefüllt, was mit einem Pfeil 82 dargestellt ist. Das Entleeren nach dem Heben des Teils 78 der Umrandung 38 ist mit Pfeil 88 charakterisiert, die Schüttgutteile 12 fallen in den Behälter 80.

Am Austritt der Speicherzone 40 beginnt die Distributionszone 42, welche am gestrichelt dargestellten Erfassungsbereich der Kamera 26 (Fig. 8) bzw. an der Selektionszone 28 endet. In diesem Distributionsbereich 42 werden die Schüttgutteile 12 für den Eintritt in die Selektionszone 28 vorbereitet, durch die schnellen Vorwärts- und Rückwärtsbewegungen der Schwingförderfläche 16 in x-Richtung und die in Richtung der Selektionszone 28 ansteigende Amplitude und Geschwindigkeit der Schwingung in z-Richtung gehen die Schüttgutteile 12 in eine einzige Lage über und vereinzeln sich.

Nach der Distributionszone 42 beginnt die Selektionszone 28, wo die Schüttgutteile 12 vereinzelt in Abstand voneinander, angeordnet sind. Schüttgutteile 12' mit einer "guten", zum Ergreifen durch den Roboter 18 (Fig. 1, 8) geeigneten Lage und Ausrichtung sind weiss, nicht ergreifbare, "schlechte" Schüttgutteile 12" in einer ungeeigneten Ausrichtung schwarz gezeichnet. Nach dem Ergreifen der guten Schüttgutteile 12' werden die übrig gebliebenen "schlechten" Schüttgutteile 12" durch Schwingungen in z-Richtung reorientiert, vorher und/oder gleichzeitig werden durch das Fördersystem neue Schüttgutteile 12 nachgeschoben. Das Visionssystem signalisiert dem Feeder, wann die Schüttgutteile durch vertikale Vibrationen reorientiert werden sollen. Dieser Vorgang wird mit den beiden Pfeilen 86 charakterisiert.

In Fig. 10 ist die Niveaulinie 50 der Schüttgutteile 12 gestrichelt angedeutet. Die Pfeile 90 in z- Richtung zeigen, dass die Amplitude A (Fig. 14) der Schwingung des Schwingförderarms 44 mit der Schwingfördertläche 16 in Richtung des stirnseitigen Endes 66 der Selektionszone 28 zunimmt. Die Pfeile 92 in x-Richtung zeigen an, dass eine Vonivärts- und eine Rückwärtsbewegung des Schwingförderarms 44 möglich ist. Neben dem dritten Zylinder 62 zur Erzeugung der Schwingungen in z-Richtung ist ein Dämpfungselement 76, vorliegend als Dämpfungszylinder ausgebildet, angeordnet.

In Fig. 11 ist die Ausgangslage für die Förderung eines Schüttgutteils 12 in x-Richtung angedeutet. Ein Schüttgutteil 12 liegt mit einem Gewicht F₉ auf der Schwingförderfläche 16 eines Schwingförderarms 44. Der Reibungskoeffizient des Schüttgutteils 12 gegenüber der Schwingförderfläche 16 beträgt µ₀. Zum Verschieben des Schüttgutteils 12 muss eine Reibungskraft F_{R} überwunden werden. Im ersten Mittel 58 zur Förderung in x-Richtung, einem Zylinder, begrenzen zwei Anschlagflächen 94, 96 den Hub des Kolbens, welcher über eine Kolbenstange 98 auf den Schwingförderarm 44 übertragen wird. In der Ausgangslage liegt der Kolben des Zylinders 58 auf der Anschlagfläche 94.

Aus dieser Ausgangslage beschleunigt der Zylinder 58 mit maximal g*µ₀ (g = Erdbeschleunigung) in vom Zylinder 58 wegweisender x-Richtung. Der Kolben fährt mit voller Geschwindigkeit auf die Aufschlagfläche 96. Beim Auffahren auf den Anschlag rutscht das Schüttgutteil 12 auf der Förderfläche um x_{w}, wobei die kinetische Energie vernichtet wird. Die Verzögerung beim Aufschlag ist wesentlich grösser als g*µ₀ (Fig. 12). Nach dem Aufschlag beschleunigt der Zylinder mit einer wesentlich grösseren Beschleunigung als g*µ₀ in Rückwärtsrichtung und fährt auf den Anschlag 94 zurück. Wegen der hohen Rückzugsbeschleunigung wird das Schüttgutteil 12 nur minimal zurückgezogen, wegen der Trägheit rutscht es auf der Schwingförderfläche 12 (Fig. 13). Pro Arbeitstakt resultiert ein Vorschub von Ax.

Durch Umkehren der Reihenfolge lässt sich das Schüttgutteil 12 natürlich auch in der Rückwärtsrichtung bewegen.

In Fig. 14 ist die Amplitude A des Schwingförderarms 44 in z- Richtung im Bereich des Sensors 74 (Fig. 8) in Metern (m) gegen die Zeit t in Millisekunden (msec) aufgetragen. Die Anregung durch die dritten Mittel 62 (Fig. 8) erfolgt in regelmässigen Zeitabständen mit einem Rechtecksignal R. Die Auslenkung erfolgt im Rhythmus **Δt** der vorgängig ermittelten Eigenfrequenz. Die Amplitude A der Schwingung S nimmt nach jeder Anregung zu. Nach dem Erreichen des Sollwerts wird die Anregung reduziert oder wenigstens zeitweise weggelassen. Ein Überschiessen des Sollwertes kann mit dem Dämpfungselement 76 (Fig. 10) korrigiert werden.

Die in Fig. 14 dargestellte Zunahme der Schwingungsamplitude A erfolgt am selben Ort. Diese Schwingungsamplituden A ändern sich, wenn sie bezüglich der x-Richtung innerhalb oder ausserhalb dieses Ortes gemessen werden. Eine ähnliche Zunahme der Schwingungsamplituden A wird festgestellt, wenn diese ohne oder mit derselben Anregung an bezüglich der x-Richtung immer weiter von der Speicherzone 50 entfemten, verschiedenen Orten gemessen werden.

In Fig. 15 ist, im Gegensatz zu Fig. 8, eine kleine Vorrichtung 10 zum Zuführen von Schüttgutteilen 12 dargestellt. Auf einer Grundplatte 100 sind die wesentlichen Komponenten gehaltert, welche in den vorhergehenden Figuren spezifiziert sind. Der Schwingförderarm 44 und die Schwingförderfläche 16 sind fest miteinander verbunden. Eine Linearführung 102 auf der Grundplatte 100 führt einen vom horizontalen Hubzylinder 58, den ersten Mitteln, in x-Richtung verschobenen Schlitten 104, welcher eine Drehachse 106 für den Schwingförderarm 44 hat. Der Hubzylinder 62, die dritten Mittel in z-Richtung, greift im Bereich der Speicherzone 20 ungefedert über einen Bolzen am Schwingförderarm 44 an und regt mit etwa 1 mm Hub die Schwingung mit in Richtung des freien Endes steigender Amplitude an. Im vorliegenden Fall wird die Federkonstante durch die Gestaltung der Biegezone 48 mit der Quernut 52 festgelegt. Mit an sich bekannten konstruktiven Massnahmen kann der Schwingförderarm auch in x-Richtung bewegt werden.

## Patentansprüche

1. Vorrichtung (10) zum Zuführen von Schüttgutteilen (12) aus einer in einem Speicher (14) mehrfach übereinander angeordneten Masse in eine stochastisch reorientierbare, individuell verteilte und entwirrte Lage in Griffweite eines Roboters (18), wobei die Vorrichtung (10) eine im Wesentlichen horizontal angeordnete Schwingförderfläche (16) mit Mitteln (58,60) zum Vorschub oder Rückzug der Schüttgutteile (12) in x- oder in x- und y- Richtung der Raumkoordinaten, Mittel (62) zum Anregen einer Schwingung der Schwingförderfläche (16) in z- Richtung der Raumkoordinaten, ein Visionssystem mit einer Kamera (26) oder einem Sensor zum individuellen Erfassen der Anzahl, Lage und Ausrichtung.der vereinzelten Schüttgutteile (12), und einen Prozessor (56) zur Verarbeitung der Sensorsignale und zur Generierung von Steuerbefehlen an Aktoren umfasst,
**dadurch gekennzeichnet, dass**
die einteilig ausgebildete Schwingförderfläche (16) vollflächig von einem Schwingförderarm (44) abgestützt ist, welche Schwingförderfläche (16) mit ersten oder mit ersten und zweiten Mitteln (58,60) in x- oder in x- und y- Richtung horizontal verschiebbar ist und sich von einer Speicherzone (40) über eine Distributionszone (42) bis zum stirnseitigen Ende einer Selektionszone (28) für die Schüttgutteile (12) erstreckt und zusammen mit dem Schwingförderarm (44) frei auskragt, die Speicher- (40), Distributions- (42) und Selektionszone (28) eine Umrandung (38) mit Spiel zu Schwingförderarm (44) Förderfläche (16) aufweisen, und die dritten Mittel (62) zur Erzeugung der Schwingbewegung (S) in z- Richtung mit dem Schwingförderarm (44) verbunden sind.

2. Vorrichtung (10) nach Anspruch 1, **dadurch gekennzeichnet, dass** der vorzugsweise im Bereich der Speicherzone (40) fest montierte Schwingförderarm (44) zur Bildung eines Sollbiegebereichs zwischen der Speicher- (40) und der Distributionszone (42) wenigstens eine querlaufende Schwächungsnut (52) und/oder -bohrung (53) aufweist oder zweiteilig mit einer verbindenden Blattfeder (51) ausgebildet ist.

3. Vorrichtung (10) nach Anspruch 1 oder 2, **dadurch gekennzeichnet, dass** die ersten, zweiten und dritten Mittel (58,60,62) als pneumatische oder hydraulische Hubzylinder oder als elektrische Linear- oder Schrittmotoren ausgebildet sind.

4. Vorrichtung (10) nach einem der Ansprüche 1 bis 3, **dadurch gekennzeichnet, dass** zum temporären Vermindern oder Stoppen der Schwingbewegung (S) in z- Richtung am Schwingförderarm (44) ein Dämpfungselement (76) angeordnet ist, vorzugsweise ein Dämpfungszylinder.

5. Vorrichtung (10) nach einem der Ansprüche 1 bis 4, **dadurch gekennzeichnet, dass** ein Sensor (74) zur Messung der Amplitude (A) und der Frequenz des Schwingförderarms (44) angeordnet ist.

6. Vorrichtung (10) nach einem der Ansprüche 1 bis 5, **dadurch gekennzeichnet, dass** der stirnseitige Teil (66) der Umrandung (38) der Selektionszone (28) entfembar, vorzugsweise als Schieber, Türe oder Klappe, ausgebildet ist.

7. Vorrichtung (10) nach einem der Ansprüche 1 bis 6, **dadurch gekennzeichnet, dass** die stirnseitige Umrandung (78) der Speicherzone (40) entfernbar, vorzugsweise als Schieber, Türe oder Klappe, ausgebildet ist.

8. Vorrichtung (10) nach einem der Ansprüche 1 bis 7, **dadurch gekennzeichnet, dass** die vorzugsweise auswechselbare Schwingförderfläche (16) aus einem verschleissfesten Material mit einstellbarem Reibungskoeffizienten oder Rollwiderstand für die Schüttgutteile (12) besteht, insbesondere aus einem Polyamid, und/oder deren Oberfläche aufgerauht oder strukturiert ausgebildet ist, und/oder deren Oberfläche beschichtet ist, insbesondere mit einem Gewebe oder Vlies.

9. Vorrichtung (10) nach einem der Ansprüche 1 bis 8, **dadurch gekennzeichnet, dass** der Schwingförderarm (44) und die Schwingförderfläche (16) wenigstens im Bereich der Selektionszone (28) transparent ausgebildet sind und unterhalb dieser Zone bevorzugt ein Gegenlicht (72) angeordnet ist.

10. Verfahren zum Betrieb einer Vorrichtung (10) nach einem des Patentansprüche 1-9 zum Zuführen von Schüttgutteilen (12) aus einer in einem Speicher (14) mehrfach übereinander angeordneten Masse in eine stochastisch reorientierbare, individuell verteilte und entwirrte Lage in Griffweite eines Roboters (18), wobei die Vorrichtung (10) eine im Wesentlichen horizontal angeordnete Schwingförderfläche (16) mit Mitteln (58,60) zum Vorschub oder Rückzug der Schüttgutteile (12) in x- oder in x- und y- Richtung der Raumkoordinaten, Mittel (62) zum Anregen einer Schwingung der Schwingförderfläche (16) in z- Richtung der Raumkoordinaten, ein Visionssystem mit einer Kamera (26) und einem Sensor zum individuellen Erfassen der Anzahl, Lage und Ausrichtung der vereinzelten Schüttgutteile (12), und einen Prozessor (56) zur Verarbeitung der Sensorsignale und zur Generierung von Steuerbefehlen an Aktoren umfasst,
**dadurch gekennzeichnet, dass**
eine Schwingbewegung (S) in z- Richtung mit in x- Richtung kontinuierlich zunehmender, programmierbarer Amplitude (A), **dadurch** entsprechend erhöhter Geschwindigkeit und Beschleunigung der Schüttgutteile (12), erzeugt wird, welche Schwingbewegung (S) in z- Richtung alternierend oder wenigstens teilweise gleichzeitig und koordiniert mit einer Vorschub- oder Rückzugsförderung der Schüttgutteile (12) in x- oder in x- und y- Richtung erfolgt, wobei während der Zeitperiode einer Momentaufnahme durch das Visionssystem bis zur Entnahme von Schüttgutteilen (12) durch den Roboter (18) alle Bewegungen der Schwingförderfläche (16) in x- oder x- und y-Richtung gestoppt und die Schwingbewegungen (S) in z-Richtung gedämpft oder gestoppt werden.

11. Verfahren nach Anspruch 10, **dadurch gekennzeichnet, dass** eine an Ort in z-Richtung bis zum Erreichen eines Sollwertes zunehmende Schwingbewegung (S) einer Amplitude (A) erzeugt wird, indem eine entsprechende, programmierbare Schwingbewegung, vorzugsweise einer Frequenz von 5 bis 30 Hz, auf einen die Schwingförderfläche (16) vollflächig abstützenden, wenigstens ausserhalb einer Speicherzone (40) frei auskragenden Schwingförderarm (44) übertragen wird.

12. Verfahren nach Anspruch 10 oder 11, **dadurch gekennzeichnet, dass** die spezifische Eigenfrequenz in z- Richtung einer Maschinenkonfiguration mit Hilfe eines unterhalb des Schwingförderarms (44) angebrachten Sensors (74) bestimmt und die dritten Mittel (62) eine entsprechende Frequenz für eine Schwingbewegung (S) erzeugen.

13. Verfahren nach einem der Ansprüche 10 bis 12, **dadurch gekennzeichnet, dass** die Vorschubbewegung der Schwingförderfläche (44) in x- oder x- und y-Richtung und die entsprechende Rückzugsbewegung mit unterschiedlicher Beschleunigung erfolgen, wobei die Schüttgutteile (12) wenigstens bei der grösseren Beschleunigung wegen ihrer Trägheit auf der Schwingförderfläche (16) rutschen.

14. Verfahren nach einem der Ansprüche 10 bis 13,**dadurch gekennzeichnet, dass** die Vorschubbewegung der Schwingförderfläche (16) in x- oder x- und y- Richtung oder die entsprechende Rückzugsbewegung ruckartig beendet wird, insbesondere durch einen harten Anschlag, wobei die Schüttgutteile (12) wegen ihrer kinetischen Energie in dieser Richtung weiterrutschen.

15. Verfahren nach einem der Ansprüche 10 bis 14, **dadurch gekennzeichnet, dass** der Prozessor (56) die Bewegungen der Schwingförderfläche (16) in x-, y- und/oder z- Richtung nach Sensorsignalen über die Anzahl, Lage und/oder Ausrichtung von Schüttgutteilen (12) in der Selektionszone (28) steuert.

16. Verfahren nach einem der Ansprüche 10 bis 15, **dadurch gekennzeichnet, dass** der Prozessor (56) nach einer Überschreitung eines anhand von Sensorsignalen der Kamera (26) festgestellten Anteils von schlechten Schüttgutteilen (12") einen Aktor für die Öffnung des stirnseitigen Teils (66) der Umrandung (38) der Selektionszone (28) ansteuert, vorzugsweise erst nach einer Reduktion oder Unterbindung der Zufuhr von neuen Schüttgutteilen (12).

## Claims

1. Device (10) for feeding bulk material items (12) from a mass multiply arranged one above the other in a store (14) into a randomly re-alignable, individually distributed and disentangled position within the reach of a robot (18), the device (10) comprising a substantially horizontally arranged oscillating conveyor surface (16) with means (58, 60) for the forward feed or reverse transport of the bulk material items (12) in the x-direction or in the x- and y-direction of the space coordinates, means (62) for exciting an oscillation of the oscillating conveyor surface (16) in the z-direction of the space coordinates, a vision system with a camera (26) or a sensor for individual detection of the number, position and alignment of the individual bulk material items (12), and a processor (56) for processing the sensor signals and generating control commands to actuators, **characterised in that** the entire surface area of a one-piece oscillating conveyor surface (16) is supported by an oscillating conveyor arm (44), which oscillating conveyor surface (16) with first or with first and second means (58, 60) is supported so as to be horizontally displaceable in the x-direction or in the x- and y-direction and extends from a storage zone (40) over a distribution zone (42) up to the front end of a selection zone (28) for the bulk material items (12) and projects freely, together with the oscillating conveyor arm (44), the storage (40), distribution (42) and selection zone (28) having an edge (38) with free space to the ostillating conveyor arm (44) / conveyor surface (16), and a third means for generating the oscillating motion (S) in the z-direction are connected to the oscillating conveyor arm (44).

2. Device (10) according to claim 1, **characterised in that** the oscillating conveyor arm (44) which is preferably rigidly mounted in the region of the storage zone (40), to form a desired bending region between the storage (40) and the distribution zone (42), has at least one weakening groove (52) and/or hole (53) extending transversely or is formed in two parts with a connecting leaf spring (51).

3. Device (10) according to claim 1 or 2, **characterised in that** the first, second and third means (58, 60, 62) are designed as pneumatic or hydraulic lifting cylinders or as electric linear or stepping motors.

4. Device (10) according to any one of claims 1 to 3, **characterised in that** a damping element (76), preferably a damping cylinder, is arranged on the oscillating conveyor arm (44) for temporarily reducing or stopping the oscillating motion (S) in the z-direction.

5. Device (10) according to any one of claims 1 to 4, **characterised in that** a sensor (74) is arranged for measuring the amplitude (A) and the frequency of the oscillating conveyor arm (44).

6. Device (10) according to any one of claims 1 to 5, **characterised in that** the front end part (66) of the edge (38) of the selection zone (28) is designed to be removable, preferably as a slide, door or flap.

7. Device (10) according to any one of claims 1 to 6, **characterised in that** the front end edge (78) of the storage zone (40) is designed to be removable, preferably as a slide, door or flap.

8. Device (10) according to any one of claims 1 to 7, **characterised in that** the preferably replaceable oscillating conveyor surface (16) consists of a wear-resistant material with an adjustable coefficient of friction or rolling resistance for the bulk material items (12), in particular made of a polyamide, and/or the surface thereof is roughened and/or textured in design, and/or the surface thereof is coated, in particular with a woven fabric or nonwoven fabric.

9. Device (10) according to any one of claims 1 to 8, **characterised in that** the oscillating conveyor arm (44) and the oscillating conveyor surface (16) are transparent in design at least in the region of the selection zone (28) and a backlight (72) is preferably arranged below this zone.

10. Method for operating a device (10) according to any one of claims 1 to 9 for feeding bulk material items (12) from a mass multiply arranged one above the other in a store (14) into a randomly re-alignable, individually distributed and disentangled position within the reach of a robot (18), the device (10) comprising a substantially horizontally arranged oscillating conveyor surface (16) with means (58, 60) for the forward feed or reverse transport of the bulk material items (12) in the x-direction or in the x- and y-direction of the space coordinates, means (62) for exciting an oscillation of the oscillating conveyor surface (16) in the z-direction of the space coordinates, a vision system with a camera (26) or a sensor for individual detection of the number, position and alignment of the individual bulk material items (12), and a processor (56) for processing the sensor signals and generating control commands to actuators, **characterised in that** an oscillating motion (S) is generated in the z-direction with a programmable amplitude (A) which is continuously increasing in the x-direction, and therefore correspondingly increased speed and acceleration of the bulk material items (12), which oscillating motion (S) in the z-direction takes place alternatingly or at least partially simultaneously and coordinated with a forward feed or reverse transport of the bulk material items (12) in the x- or x- and y-direction, wherein, during the time period of a snapshot by the vision system until removal of bulk material items (12) by the robot (18), all movements of the oscillating conveyor surface (16) in the x- or x- and y-direction are stopped and the oscillating motions (S) in the z-direction are damped or stopped.

11. Method according to claim 10, **characterised in that** an increasing oscillation motion (S) with an amplitude (A) is generated in situ in the z-direction until a desired value is reached, **in that** a corresponding, programmable oscillating motion, preferably with a frequency of 5 to 30 Hz, is transmitted to an oscillating conveyor arm (44) supporting the entire surface area of the oscillating conveyor surface (16) and freely projecting at least outside a storage zone (40).

12. Method according to claim 10 or 11, **characterised in that** the specific inherent frequency in the z-direction of a machine configuration is determined with the aid of a sensor (74) provided below the oscillating conveyor arm (44) and the third means (62) generate a corresponding frequency for an oscillating motion (S).

13. Method according to any one of claims 10 to 12, **characterised in that** the forward feed movement of the oscillating conveyor surface (44) in the x- or x- and y-direction and the corresponding reverse movement take place at different acceleration, the bulk material items (12) sliding on the oscillating conveyor surface (16) because of their inertia at least during the greater acceleration.

14. Method according to any one of claims 10 to 13, **characterised in that** the forward feed movement of the oscillating conveyor surface (16) in the x- or x- and y-direction or the corresponding reverse movement is ended jerkily, in particular owing to a hard stop, with the bulk material items (12) sliding further in this direction because of their kinetic energy.

15. Method according to any one of claims 10 to 14, **characterised in that** the processor (56) controls the movements of the oscillating conveyor surface (16) in the x-, y- and/or z-direction according to sensor signals by way of the number, position and/or alignment of bulk material items (12) in the selection zone (28).

16. Method according to any one of claims 10 to 15, **characterised in that**, once a proportion of poor bulk material items (12") established with the aid of sensor signals from the camera (26) has been exceeded, the processor (56) triggers an actuator for opening the front end part (66) of the edge (38) of the selection zone (28), preferably only after a reduction in or stopping of the feeding of new bulk material items (12).

## Revendications

1. Dispositif destiné à amener des pièces en vrac (12), provenant d'une masse de pièces empilées en couches multiples les unes sur les autres dans un stockage (14), jusqu'à une position où elles sont séparées, réparties individuellement, et réorientables stochastiquement, à portée de saisie d'un robot (18), le dispositif comprenant une surface oscillante (16) de convoyeur disposée essentiellement à l'horizontale et équipée de moyens (58, 60) d'avance ou de recul des pièces en vrac (12) dans la direction x ou les directions x et y des coordonnées spatiales, des moyens (62) communiquant une oscillation à la surface oscillante (16) de convoyeur dans la direction z des coordonnés spatiales, un système de visualisation incluant une caméra (26) ou un capteur pour détecter individuellement le nombre, la position et l'orientation des pièces en vrac isolées (12), et un processeur (56) de traitement des signaux de capteur et de génération d'ordres de commande à des actionneurs,
**caractérisé en ce que**
la surface oscillante (16) de convoyeur à structure d'un seul tenant est soutenue sur toute sa surface par un bras oscillant (44) de convoyeur, **en ce que** cette surface oscillante de convoyeur peut coulisser horizontalement sous l'effet de premiers ou de premiers et deuxièmes moyens (58, 60) dans la direction x ou les directions x et y et s'étend depuis une zone de stockage (40) suivie par une zone de répartition (42) jusqu'à l'extrémité frontale d'une zone de sélection (28) pour les pièces en vrac (12), et fait saillie librement avec le bras oscillant (44) de convoyeur, **en ce que** les zones de stockage (40), de répartition (42) et de sélection (28) comportent une bordure (38) qui ménage un jeu par rapport au bras oscillant (44) de convoyeur et/ou à la surface oscillante (16) de convoyeur, et **en ce que** les troisièmes moyens (62) de génération d'un mouvement oscillant (S) dans la direction z sont connectés au bras oscillant (44) de convoyeur.

2. Dispositif selon la revendication 1, **caractérisé en ce que** le bras oscillant (44) de convoyeur, monté de préférence de façon fixe dans la région de la zone de stockage (40), comporte au moins une rainure (52) et/ou un alésage (53) d'affaiblissement disposé transversalement entre la zone de stockage (40) et la zone de répartition (42), ou consiste en deux éléments connectés par un ressort à lame, pour former une région de flexion programmée.

3. Dispositif selon la revendication 1 ou 2, **caractérisé en ce que** les premiers, deuxièmes et troisièmes moyens (58, 60, 62) consistent en vérins pneumatiques ou hydrauliques, ou en moteurs électriques linéaires ou pas à pas.

4. Dispositif selon l'une quelconque des revendications précédentes, **caractérisé en ce qu'**un élément amortisseur (76), de préférence un vérin amortisseur, est agencé sur le bras oscillant (44) de convoyeur pour réduire ou arrêter temporairement le mouvement oscillant (S) dans la direction z.

5. Dispositif selon l'une quelconque des revendications précédentes, **caractérisé en ce qu'**il comprend un capteur (74) de mesure de l'amplitude (A) et de la fréquence d'oscillation du bras oscillant (44) de convoyeur.

6. Dispositif selon l'une quelconque des revendications précédentes, **caractérisé en ce que** la partie frontale (66) de la bordure (38) de la zone de sélection (28) est amovible, et consiste de préférence en un tiroir, des portes ou un volet.

7. Dispositif selon l'une quelconque des revendications précédentes, **caractérisé en ce que** la bordure frontale (78) de la zone de stockage (40) est amovible, et consiste de préférence en un tiroir, des portes ou un volet.

8. Dispositif selon l'une quelconque des revendications précédentes, **caractérisé en ce que** la surface oscillante (16) de convoyeur, de préférence remplaçable, consiste en une matière résistante à l'usure, dont le coefficient de friction ou la résistance à l'usure est réglable pour les pièces en vrac (12), en particulier en un polyamide, et/ou dont la surface est rendue rugueuse ou structurée, et/ou dont la surface est revêtue, en particulier d'un tissu ou d'un non-tissé.

9. Dispositif selon l'une quelconque des revendications précédentes, **caractérisé en ce que** le bras oscillant (44) de convoyeur et la surface oscillante (16) de convoyeur sont transparents au moins dans la région de la zone de sélection (28), et qu'un éclairage (72) par transmission est de préférence disposé au-dessous de cette zone.

10. Procédé de mise en oeuvre d'un dispositif selon l'une quelconque des revendications précédentes destiné à amener des pièces en vrac (12), provenant d'une masse de pièces empilées en couches multiples les unes sur les autres dans un stockage (14), jusqu'à une position où elles sont séparées, réparties individuellement, et réorientables stochastiquement, à portée de saisie d'un robot (18), le dispositif comprenant une surface oscillante (16) de convoyeur disposée essentiellement à l'horizontale et équipée de moyens (58, 60) d'avance ou de recul des pièces en vrac (12) dans la direction x ou les directions x et y des coordonnées spatiales, des moyens (62) communiquant une oscillation à la surface oscillante (16) de convoyeur dans la direction z des coordonnés spatiales, un système de visualisation incluant une caméra (26) ou un capteur pour détecter individuellement le nombre, la position et l'orientation des pièces en vrac isolées (12), et un processeur (56) de traitement des signaux de capteur et de génération d'ordres de commande à des actionneurs,
**caractérisé en ce que**
le dispositif génère dans la direction z un mouvement oscillant (S) dont l'amplitude programmable (A) augmente de façon continue dans la direction x, en élevant de façon correspondante la vitesse et l'accélération des pièces en vrac (12), **en ce que** ce mouvement oscillant (S) dans la direction z s'effectue de façon alternée ou au moins partiellement simultanée et coordonnée avec un transport d'avance ou de recul des pièces en vrac (12) dans la direction x ou les directions x et y, et **en ce que** tous les mouvements de la surface oscillante (16) de convoyeur dans la direction x ou les directions x et y sont arrêtés et les mouvements d'oscillation (S) dans la direction z sont amortis ou arrêtés pendant le laps de temps compris entre un instantané pris par le système de visualisation et le prélèvement de pièces en vrac (12) par le robot (18).

11. Procédé selon la revendication 10, **caractérisé en ce que** le dispositif génère un mouvement d'oscillation (S) en direction z, dont l'amplitude (A) croît à chaque emplacement jusqu'à atteindre une valeur de consigne, par l'effet d'une transmission d'un mouvement d'oscillation correspondant programmable, de préférence d'une fréquence de 5 à 30 Hz, à un bras oscillant (44) de convoyeur qui soutient une surface oscillante (16) de convoyeur sur toute la surface de celle-ci et fait librement saillie en dehors d'une zone de stockage (40).

12. Procédé selon la revendication 10 ou 11, **caractérisé en ce que** la fréquence propre spécifique en direction z d'une configuration de machine est déterminée au moyen d'un capteur (74) monté au dessous d'un bras oscillant (44) de convoyeur, et **en ce que** les troisièmes moyens (62) génèrent une fréquence correspondante pour un mouvement d'oscillation (S).

13. Procédé selon l'une quelconque des revendications 10 à 12, **caractérisé en ce que** l'accélération du mouvement d'avance de la surface oscillante (16) de convoyeur dans la direction x ou les directions x et y est différente de celle du mouvement de recul correspondant, et **en ce que** les pièces en vrac (12) glissent par inertie sur la surface oscillante (16) de convoyeur sous l'effet de la plus élevée de ces accélérations.

14. Procédé selon l'une quelconque des revendications 10 à 13, **caractérisé en ce que** le mouvement d'avance de la surface oscillante (16) de convoyeur dans la direction x ou les directions x et y ou le mouvement de recul correspondant est terminé par un à-coup, en particulier par une butée dure, et **en ce que** les pièces en vrac (12) continuent à glisser dans cette direction en raison de leur énergie cinétique.

15. Procédé selon l'une quelconque des revendications 10 à 14, **caractérisé en ce que** le processeur (56) commande les mouvements de la surface oscillante (16) de convoyeur dans la direction x ou les directions x et y en fonction de signaux de capteur indiquant le nombre, la position et/ou l'orientation des pièces en vrac (12) dans la zone de sélection (28).

16. Procédé selon l'une quelconque des revendications 10 à 15, **caractérisé en ce que** le processeur (56) active un actionneur pour ouvrir la partie frontale (66) de la bordure (38) de la zone de sélection (28) lorsque la proportion de pièces en vrac mauvaises (12") déterminée au moyen des signaux de capteur de la caméra (26) dépasse une valeur fixe, de préférence après avoir au préalable réduit ou interrompu l'amenée de nouvelles pièces en vrac (12).
